(19) **Europäisches Patentamt / European Patent Office / Office européen des brevets**

(11) **EP 4 302 872 A1**

(12) **EUROPEAN PATENT APPLICATION**
published in accordance with Art. 153(4) EPC

(43) Date of publication:
**10.01.2024 Bulletin 2024/02**

(21) Application number: **22763372.4**

(22) Date of filing: **03.03.2022**

(51) International Patent Classification (IPC):
**B01J 23/80** (2006.01)   **B01J 23/10** (2006.01)
**B01J 23/825** (2006.01)   **B01J 23/83** (2006.01)
**C01B 32/40** (2017.01)   **C01G 9/00** (2006.01)
**C01G 15/00** (2006.01)   **C01G 25/00** (2006.01)

(52) Cooperative Patent Classification (CPC):
**B01J 23/10; B01J 23/80; B01J 23/825;
B01J 23/83; C01B 32/40; C01G 9/00; C01G 15/00;
C01G 25/00**

(86) International application number:
**PCT/JP2022/009051**

(87) International publication number:
**WO 2022/186319 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2021 JP 2021034850**

(71) Applicant: SEKISUI CHEMICAL CO., LTD.
**Osaka-shi
Osaka
530-8565 (JP)**

(72) Inventors:
• **SAKURAI Risa**
  **Tsukuba-shi, Ibaraki 300-4292 (JP)**
• **IIJIMA Keisuke**
  **Tsukuba-shi, Ibaraki 300-4292 (JP)**
• **TAKIZAWA Koji**
  **Tsukuba-shi, Ibaraki 300-4292 (JP)**
• **SUZUKI Souichirou**
  **Tsukuba-shi, Ibaraki 300-4292 (JP)**

(74) Representative: **Ter Meer Steinmeister & Partner
Patentanwälte mbB
Nymphenburger Straße 4
80335 München (DE)**

(54) **REDUCING AGENT, GAS PRODUCTION METHOD, AND METHOD FOR INCREASING CONVERSION EFFICIENCY**

(57) There are provided, for example, a reducing agent that can be used in a chemical looping method, a method of producing a gas using such a reducing agent and a method of increasing conversion efficiency, through which the efficiency of converting carbon dioxide into carbon monoxide is high. The reducing agent of the present invention is a reducing agent that produces valuables containing carbon by reducing carbon dioxide, including a granular support having a plurality of pores and an angle of repose of 45° or more and an oxygen carrier which is supported on the support and has oxygen ion conductivity. In addition, in the reducing agent of the present invention, the support preferably has an average pore size of 0.1 nm or more.

EP 4 302 872 A1

**Description**

[Technical Field]

The present invention relates to a reducing agent, a method of producing a gas and a method of increasing conversion efficiency, and more specifically, for example, a reducing agent that can be used in a chemical looping method, a method of producing a gas using such a reducing agent and a method of increasing conversion efficiency.

[Background Art]

In recent years, the concentration of carbon dioxide, which is a type of a greenhouse effect gas, in the atmosphere, has continued to rise. Rising of the concentration of carbon dioxide in the atmosphere contributes to global warming. Therefore, it is important to recover carbon dioxide released into the atmosphere, and furthermore, if the recovered carbon dioxide can be converted into a valuable substance and reused, a carbon recycling society can be realized.

Conventionally, as a method of producing carbon monoxide from carbon dioxide, a method of using a reverse water gas shift reaction is known. However, in this conventional reverse water gas shift reaction, since the product carbon monoxide and water coexist in the system, there is a problem in that efficiency of converting carbon dioxide into carbon monoxide is low due to chemical equilibrium constraints.

Therefore, in order to address the problem, a chemical looping method is used to convert (synthesize) carbon dioxide into (from) carbon monoxide. The chemical looping method referred to here is a method in which the reverse water gas shift reaction is divided into two reactions including a reduction reaction using hydrogen and a reaction of producing carbon monoxide from carbon dioxide, and these reactions are linked with an oxygen carrier (for example, metal oxide: $MO_x$) (refer to the following formula).

$$H_2 + MO_x \rightarrow H_2O + MO_{x-1}$$

$$CO_2 + MO_{x-1} \rightarrow CO + MO_x$$

Here, in the formula, $MO_{x-1}$ represents a state in which a part or all of the metal oxide has been reduced.

In such a chemical looping method, during respective reactions, since water and carbon monoxide, which are substrates for a reverse reaction, do not coexist, it is possible to obtain a higher efficiency of converting carbon dioxide into carbon monoxide than the chemical equilibrium of the reverse water gas shift reaction.

For example, PTL 1 discloses use of an oxygen carrier having a perovskite type crystal structure supported on a support in a chemical looping method.

[Citation List]

[Patent Literature]

[PTL 1] U.S. Patent Application Publication No. 2020/0139351

[Summary of Invention]

[Technical Problem]

However, according to the studies performed by the inventors, in PTL 1, the configuration (for example, a size, a shape, etc.) of the support is not studied at all, and the efficiency of converting carbon dioxide into carbon monoxide (valuables containing carbon) is still insufficient.

The present invention has been made in view of such circumstances, and an object of the present invention is to increase the efficiency of converting carbon dioxide to the valuables containing carbon (that is, the yield of the valuables containing carbon) using a support having a specific configuration, and to provide, for example, a reducing agent that can be used in a chemical looping method, a method of producing a gas using such a reducing agent and a method of increasing conversion efficiency.

[Solution to Problem]

Such objects are achieved by the present invention below.

(1) A reducing agent of the present invention is a reducing agent that produces valuables containing carbon by reducing carbon dioxide, including:

a granular support having a plurality of pores and an angle of repose of 45° or more; and
an oxygen carrier which is supported on the support and has oxygen ion conductivity,
wherein the support has an average pore size of 0.1 nm or more.

(2) In the reducing agent of the present invention, preferably, the support has an average particle size of 0.1 to 50 um.
(3) In the reducing agent of the present invention, preferably, the support has a specific surface area of 400 m²/g or more.
(4) In the reducing agent of the present invention, preferably, the support contains at least one of elements belonging to Group 2 to Group 4, Group 12 and Group 13 in the periodic table.
(5) In the reducing agent of the present invention, preferably, the support contains at least one of magnesium (Mg), cerium (Ce), titanium (Ti), zirconium (Zr), aluminum (Al), and silicon (Si).
(6) In the reducing agent of the present invention, preferably, the oxygen carrier contains at least two of elements belonging to Group 2 to Group 4, and Group 11 to Group 13 in the periodic table.
(7) In the reducing agent of the present invention, preferably, the oxygen carrier contains at least one of magnesium (Mg), cerium (Ce), zirconium (Zr), copper (Cu), zinc (Zn), and indium (In).
(8) In the reducing agent of the present invention, preferably, the content of the support with respect to 100 mol% of the reducing agent is 50 mol% or more.
(9) Preferably, the reducing agent of the present invention reduces, by being brought into contact with a raw material gas containing carbon dioxide, carbon dioxide and is used to produce a product gas containing carbon monoxide as the valuables containing carbon.
(10) In the reducing agent of the present invention, preferably, the oxidized reducing agent is reduced by being brought into contact with a hydrogen-containing reducing gas.
(11) Preferably, the reducing agent of the present invention is used in separate reaction processes, which are a reduction reaction of the carbon dioxide and a reduction reaction of the oxidized reducing agent.
(12) A method of producing a gas of the present invention includes bringing the reducing agent of the present invention into contact with a raw material gas containing carbon dioxide, reducing carbon dioxide, and producing a product gas containing carbon monoxide.
(13) A method of increasing conversion efficiency of the present invention includes using a reducing agent in which an oxygen carrier having oxygen ion conductivity is supported on a granular support having a plurality of pores and an angle of repose of 45° or more, and increasing an efficiency of converting carbon dioxide into valuables containing carbon using the reducing agent compared with when another reducing agent in which the oxygen carrier is used alone or the oxygen carrier is supported on a granular support having an angle of repose of less than 45° is used, wherein the support has an average pore size of 0.1 nm or more.

[Advantageous Effects of Invention]

According to the present invention, it is possible to efficiently produce valuables containing carbon from carbon dioxide. In addition, the reducing agent of the present invention can be used, for example, in a chemical looping method.

[Description of Embodiments]

Hereinafter, a reducing agent, a method of producing a gas and a method of increasing conversion efficiency of the present invention will be described in detail with reference to preferable embodiments.

[Reducing Agent]

The reducing agent of the present invention is used to reduce carbon dioxide by bringing it in contact with a raw material gas containing carbon dioxide and to produce a product gas containing carbon monoxide (valuables containing carbon) (that is, used in a method of producing a gas of the present invention). In addition, the reducing agent can be reduced (reproduced) by bringing a reducing gas into contact with the oxidized reducing agent.
In this case, preferably, when the raw material gas and the reducing gas are alternately passed into the reaction tube (reaction container) filled with the reducing agent of the present invention, conversion of carbon dioxide into carbon monoxide using the reducing agent and reproduction of the reducing agent in an oxidized state using the reducing gas are performed.
The reducing agent of the present invention includes a granular support having a plurality of pores and an angle of repose of 45° or more and an oxygen carrier which is supported on the support and has oxygen ion conductivity.

Here, the oxygen carrier is a compound which has oxygen ion conductivity and can cause reversible oxygen vacancies, and is a compound in which oxygen is deficient due to its reduction, but when the compound in an oxygen-deficient state (reduced state) comes into contact with carbon dioxide, it exhibits a function of depriving carbon dioxide of oxygen and performing reduction.

The oxygen carrier in the present invention preferably contains at least one of elements belonging to Group 2 to Group 4, and Group 11 to Group 13 in the periodic table, and more preferably contains at least one of magnesium (Mg), cerium (Ce), zirconium (Zr), copper (Cu), zinc (Zn), and indium (In), and still more preferably contains at least two thereof.

Examples of oxygen carriers include oxides containing the elements and alloys containing the elements.

Here, the compound constituting the support may be amorphous or crystalline. In addition, the crystal may have any structure.

It is thought that, in oxygen carriers (particularly oxides) containing such elements, oxygen vacancies are produced more efficiently, distortion is generated in the lattice defects, and this distortion makes it easier to deprive carbon dioxide of oxygen.

In particular, an oxide containing at least two of the above elements (a composite oxide) hardly adsorbs impurities and can maintain an ability to deprive carbon dioxide of oxygen over a long time. As a result, it is possible to increase efficiency of converting carbon dioxide into carbon monoxide using the reducing agent.

Specific examples of oxygen carriers include, for example, binary oxides such as oxides containing copper and zinc, oxides containing cerium and zirconium, oxides containing cerium and samarium, oxides containing cerium and hafnium, and oxides containing indium and copper, and ternary oxides such as oxides containing indium, copper and magnesium, oxides containing iron, cerium and zirconium, and oxides containing lanthanum, strontium and iron.

The support in the present invention is granular. Here, the term "granular" is a concept including a powder form, a particle form, a mass form, etc, and being in any form, and the shape thereof may be a spherical shape, a plate shape, a polygonal (polyhedral) shape, a crushed shape, a columnar shape, a needle shape, a scale shape, or a combination thereof.

In addition, in the support in the present invention, the angle of repose is 45° or more, preferably 50° or more, and more preferably 55° or more. In addition, the angle of repose is 90° or less, preferably 80° or less, and more preferably 70° or less.

When a support having such an angle of repose is used, it is possible to secure a sufficiently large space between particles of the reducing agent filled into the reaction tube. Therefore, the diffusion rate of the raw material gas and the product gas in the reaction tube increases and the efficiency of converting carbon dioxide into carbon monoxide using the reducing agent can be improved. Here, if the angle of repose of the support is too large, the fluidity of the reducing agent is lowered and the workability of filling the reducing agent into the reaction tube is likely to deteriorate.

Therefore, the present invention includes a method of controlling performance of a reducing agent by allowing an oxygen carrier to be supported on a support having a desired angle of repose. That is, the performance of the reducing agent can be reduced by allowing an oxygen carrier to be supported on a support having an angle of repose of less than 45°, and on the other hand, the performance of the reducing agent can be increased by allowing an oxygen carrier to be supported on a support having an angle of repose of 45° or more.

Specifically, in a method of increasing conversion efficiency of the present invention, when a reducing agent in which an oxygen carrier having oxygen ion conductivity is supported on a granular support having a plurality of pores and an angle of repose of 45° is used, compared to when another reducing agent in which the oxygen carrier is used alone or the same oxygen carrier as described above is supported on a granular support having an angle of repose of less than 45° is used, it is possible to increase the efficiency of converting carbon dioxide into the valuables containing carbon using the former reducing agent.

Here, the support to be used is appropriately selected according to the purpose and properties of the oxygen carrier.

The granular support tends to have a larger angle of repose as its surface condition becomes rougher (that is, as the degree of surface irregularities increases). Therefore, the shape of the support is preferably a polygonal columnar shape (a honeycomb columnar shape), a spherical shape with a large degree of surface irregularities, a crushed shape, or the like and is more preferably a polygonal columnar shape.

In addition, the support may be formed of primary particles or formed of higher-order particles such as secondary or higher-order particles, or may have any particle shape. In addition, the support may be a mixture containing particles with a plurality of particle shapes, and is preferably formed of secondary particles in which primary particles are aggregated. The support formed of secondary particles has a larger degree of surface irregularities, and the angle of repose tends to satisfy the above range. In addition, when particles are formed into a higher-order shape and particles with a plurality of particle shapes are mixed, it is possible to prepare a support (support mixture) having a desired angle of repose.

In this regard, the average particle size of the support is preferably 0.1 to 50 $\mu$m, more preferably 0.5 to 25

μm, and still more preferably 1 to 10 um.

The particle size distribution of the support is unimodal, and the value of (D90-D10)/D50 expressed using D10, D90 and D50 in the number-based particle size distribution obtained by measurement according to a laser diffraction scattering type particle size distribution measurement method is preferably 2.5 or less. In this case, since the particle size distribution of the support becomes a distribution having a sharp peak with a small full width at half maximum, the proportion of the support having a too small particle size is reduced. Therefore, the space between particles of the reducing agent filled into the reaction tube is not clogged with fine particles of the reducing agent, and a sufficiently large space can be reliably secured.

Here, in this specification, the average particle size is a diameter (D50) at a cumulative of 50% in the number-based particle size distribution obtained by measurement according to a laser diffraction scattering type particle size distribution measurement method, that is, the median diameter. In addition, D10 is a diameter at a cumulative of 10% in the same particle size distribution, and D90 is a diameter at a cumulative of 90% in the same particle size distribution.

In addition, the average particle size when the support has a non-spherical shape (irregular shape) is D50 in the particle size distribution measured based on a light intensity distribution pattern of diffracted/scattered light calculated assuming that the support has a spherical shape. In this method, the particle size distribution of spherical particles showing scattering patterns that most closely match the measured scattering patterns is obtained as a result of measurement.

The specific surface area of the support is preferably 400 m$^2$/g or more, more preferably 500 m$^2$/g or more, and still more preferably 500 to 900 m$^2$/g. When the specific surface area is within the above range, it is possible to sufficiently increase the number of active sites, and it is possible to increase the contact area between the raw material gas and the reducing agent. Therefore, it becomes easy to improve the efficiency of converting carbon dioxide into carbon monoxide.

Here, in this specification, the "specific surface area" of the support is a BET specific surface area measured by a BET gas adsorption method using nitrogen as an adsorption gas.

In addition, the total pore volume of the support is preferably 0.03 cm$^3$/g or more, more preferably 0.1 to 30 cm$^3$/g, and still more preferably 0.5 to 5 cm$^3$/g. If the total pore volume is too small, it becomes for the raw material gas and the reducing gas to enter the inside of the reducing agent, and the diffusibility of the raw material gas and the product gas within the pores decreases. As a result, the contact area between the reducing agent and the raw material gas and the reducing gas is reduced and the efficiency of converting carbon dioxide into carbon monoxide using the reducing agent and the efficiency of reproduction of the reducing agent in an oxidized state using the reducing gas tend to decrease. On the other hand, even if the pore volume increases and exceeds the upper limit value, no further increase in the effect can be expected, and the mechanical strength tends to decrease depending on the type of the reducing agent.

Here, in this specification, as the "total pore volume" of the support, a value measured by a gas adsorption method can be used.

Here, the gas adsorption method is a method in which nitrogen gas is used as an adsorption gas, nitrogen molecules are adsorbed on the surface of the support, and the pore distribution is measured from condensation of molecules.

The average pore size of the support is preferably 0.1 nm or more, more preferably 0.1 nm to 60 nm, still more preferably 0.5 to 30 nm, and yet more preferably 1 to 15 nm. In a support (reducing agent) having such an average pore size, a raw material gas and a product gas can diffuse smoothly and reliably. Therefore, it is possible to further improve the efficiency of converting carbon dioxide into carbon monoxide. In addition, since the oxygen carrier is dispersed and supported on the support and a sufficiently large space can be secured, it is possible to alleviate expansion and contraction when the oxygen carrier takes in and releases oxygen.

Here, in this specification, as the "average pore size," a value calculated from the total pore volume (total pore volume of the support) and the BET specific surface area can be used.

Specifically, a calculation method (BJH method) assuming that the shape of the pore is a cylinder shape can be used. In this case, the average pore size of pores can be calculated by 4V1/A1 assuming that the side area of the cylinder is the BET specific surface area A1 and the volume of the cylinder is the total pore volume V1.

The support may be any support that is hardly modified due to the raw material gas, reaction conditions or the like, and the material constituting the support is not particularly limited. Here, the material constituting the support is a compound different from the material constituting the oxygen carrier.

The support preferably contains at least one of elements belonging to Group 2 to Group 4, Group 12 and Group 13 in the periodic table and more preferably contains at least one of magnesium (Mg), cerium (Ce), titanium (Ti), zirconium (Zr), aluminum (Al), and silicon (Si). A support containing such an element is preferable because it does not adversely affect the reaction of the oxygen carrier and has an excellent oxygen carrier support ability.

As an example of a form in which a support supports an oxygen carrier, a form in which an oxygen carrier adheres to (covers) at least a part of the inner peripheral surface and the surface of pores of the support may be exemplified. With such a configuration, it is possible to prevent structural changes such as aggregation of oxygen carriers, thereby contributing to increasing the lifespan of the oxygen carrier (reducing agent). In addition, since the specific surface area of the oxygen carrier increases and the reaction efficiency is improved, the reaction temperature can be lowered, which contributes to reduction of operating costs.

In addition, since the amount of an expensive oxygen carrier used can be reduced, it also contributes to reduction of the reducing agent production cost.

Specific examples of supports include, for example, silica ($SiO_2$) particles, titania ($TiO_2$) particles, ceria ($CeO_2$) particles, magnesia (MgO) particles, alumina ($\alpha Al_2O_3$, $\gamma Al_2O_3$) particles, zirconia ($ZrO_2$) particles, molybdenum carbide ($CMo_2$) particles, silicon carbide (SiC) particles, niobium oxide ($Nb_2O_5$) particles, and zeolite particles. These particles may be used alone or two or more thereof may be used in combination. These particles are preferable because they have excellent effects described above.

The content of the support with respect to 100 mol% of the reducing agent is preferably 50 mol% or more, more preferably 50 to 95 mol%, still more preferably 60 to 90 mol%, and particularly preferably 70 to 85 mol%. When the support is contained in such an amount, it is possible to increase the specific surface area (the number of active sites) of the oxygen carrier and further improve the efficiency of converting carbon dioxide into carbon monoxide. In addition, since the amount of the oxygen carrier used can be reduced, it is possible to further reduce the reducing agent production cost.

The filling density of the reducing agent is preferably 1.1 g/mL or less, more preferably 0.03 to 1 g/mL, and still more preferably 0.05 to 0.9 g/mL. If the filling density is too low, the gas diffusion rate becomes too fast, and the time for which the reducing agent is in contact with the raw material gas and the reducing gas is reduced. As a result, the efficiency of converting carbon dioxide into carbon monoxide using the reducing agent and the efficiency of reproduction of the reducing agent in an oxidized state using the reducing gas tend to decrease. On the other hand, if the filling density is too high, the gas passing rate becomes slow, the reaction is unlikely to proceed, and it takes a long time to produce the product gas.

In addition, with such a reducing agent, since distortion of lattice defects of the oxygen carrier can be sufficiently increased, the oxygen capacity of the reducing agent can be kept high in a wide range from a low temperature (about 400°C) to a high temperature (about 650°C). That is, the reducing agent can efficiently convert carbon dioxide into carbon monoxide in a wide temperature range.

The oxygen capacity of the reducing agent at 400°C is preferably 1 to 40 mass% and more preferably 2 to 30 mass%. If the oxygen capacity of the reducing agent at a low temperature is within the above range, it means that the oxygen capacity is sufficiently high even at a temperature (about 650°C) during an actual operation, and it can be said that the reducing agent has very high efficiency of converting carbon dioxide into carbon monoxide.

[Method of Producing Reducing Agent]

Next, a method of producing a reducing agent of the present invention will be described.

[[Preparation of Support]]

For a support that can be used in the present invention, for example, a method in which, in the presence of a surfactant, compounds (support precursor) containing elements constituting the support are added, mixed and reacted to obtain a complex, and the surfactant is then removed from the complex may be exemplified.

Examples of support precursors include alkoxides, nitrates, sulfates, chlorides, hydroxides, and carbonates. In addition, in the case of salts, as necessary, hydrates may be used.

As surfactants, for example, cationic surfactants, anionic surfactants, amphoteric surfactants, and nonionic surfactants may be used alone or two or more thereof may be used in combination.

Examples of cationic surfactants include primary amine salts, secondary amine salts, tertiary amine salts, and quaternary ammonium salts. Among these, as the cationic surfactant, a quaternary ammonium salt is preferable, and an alkyl (the number of carbon atoms: 8 to 22) trimethylammonium salt is more preferable.

Examples of anionic surfactants include carboxylates, sulfates, sulfonates, and phosphates.

Examples of amphoteric surfactants include sodium laurylaminopropionate, stearyldimethylbetaine, and lauryldihydroxyethylbetaine.

Examples of nonionic surfactants include ether-type nonionic surfactants and nitrogen-containing nonionic surfactants. Among these, the nonionic surfactant is preferably an ether-type nonionic surfactant, and more preferably a polyalkylene oxide block copolymer having a polyethylene oxide chain and a polypropylene oxide chain as structural units.

When a support precursor and a surfactant are mixed, a suitable solvent may be used. The solvent is not particularly limited, and examples thereof include water, organic solvent, and mixed solvents thereof.

As water, for example, deionized water from which metal ions and the like have been removed or distilled water is preferable. As the organic solvent, for example, a linear aliphatic alcohol such as methanol, ethanol, n-propanol, or n-hexanol is preferable.

In addition, an acidic solution or a basic solution may be added to a solvent. As the acidic solution, for example, an aqueous solution containing an inorganic acid such as hydrogen chloride, sulfuric acid, nitric acid, or phosphoric acid can be used. On the other hand, as the basic solution, for example, an aqueous solution containing an inorganic base such as sodium hydroxide, calcium carbonate, or ammonia can be used.

The obtained complex is filtered, washed with water or the like and dried and the surfactant is then removed.

Examples of methods of removing a surfactant include a method of firing a complex and a method of extracting with an organic solvent such as hydrochloric acid-ethanol.

Here, the temperature during firing is not particularly limited, and is preferably 200 to 800°C and more preferably 400 to 700°C.

Through the above processes, a support having the above structure and properties is obtained.

Here, commercially available products can also be used as supports. Examples of commercially available support products include TMPS-4R and TMPS-2 (all commercially available from Taiyo Kagaku Co., Ltd.), SBA-15 (commercially available from ACS Material or commercially available from Sigma-Aldrich), Sunsphere H series (commercially available from AGC Si-Tech Co., Ltd.), ceria (commercially available from FUJIFILM Wako Pure Chemical Corporation), CARiACT series (commercially available from Fuji Silysia Chemical Ltd.), magnesia (commercially available from Sigma-Aldrich), α alumina (commercially available from FUJIFILM Wako Pure Chemical Corporation), and zirconia (commercially available from FUJIFILM Wako Pure Chemical Corporation).

[Supporting Oxygen Carrier on Support]

An oxygen carrier can be supported on a support, for example, as follows.

First, an aqueous solution is prepared by dissolving salts of elements constituting an oxygen carrier in water.

Here, for adjustment of the aqueous solution, for example, acidic water adjusted to be acidic with citric acid, acetic acid, malic acid, tartaric acid, hydrochloric acid, nitric acid, a mixture thereof or the like may be used.

Examples of salts of elements constituting an oxygen carrier include alkoxides, sulfates, chlorides, hydroxides, carbonates and composites thereof, and among these, alkoxides are preferable. In addition, for the above salts, as necessary, hydrates may be used.

Next, the aqueous solution is brought into contact with the support.

When the aqueous solution is brought into contact with the support, the support may be added to the aqueous solution or the aqueous solution may be added (for example, added dropwise) to the support, but the latter method is preferable. According to the latter method, the aqueous solution can be slowly permeated into the support and the aqueous solution can be impregnated into the inside of the support. Therefore, when a porous support is used, this process can also be called an impregnation process.

After one of the aqueous solution and the support is added to the other thereof, the support is preferably immersed in the aqueous solution.

The time for immersing the support in the aqueous solution may be appropriately set according to the configuration of the support, the viscosity of the aqueous solution and the like, and the time is not particularly limited and is preferably 0.1 hours to 5 days and more preferably 1 hour to 3 days. The pressure at this time is not particularly limited, and is preferably 0 to 2 MPa and more preferably 0 to 1 MPa.

In addition, the amount of the aqueous solution may be appropriately set according to the configuration of the support, the viscosity of the aqueous solution and the like, and the amount is not particularly limited, and is preferably 1 to 500 mL and more preferably 5 to 350 mL per 1 g of the support.

When the aqueous solution is brought into contact with the support under such conditions, a sufficient amount of oxygen carriers can be supported on the support.

In addition, in this case, external energy, for example, vibration (ultrasonic vibration) or shaking, may be applied to the aqueous solution.

Here, an operation of bringing a support into contact with (immersing it in) the aqueous solution as described above may be performed only once or may be repeated a plurality of times.

Next, the support in contact with the aqueous solution is separated from the aqueous solution and dried and then fired. Therefore, the oxygen carrier is fixed to the support, and the reducing agent can be obtained.

The support can be separated from the aqueous solution by, for example, filtration, decantation, centrifugation, or removal of a solvent with an evaporator.

The drying temperature is preferably 20 to 200°C and more preferably 50 to 150°C. In addition, the drying time is preferably 1 hour to 10 days and more preferably 2 hours to 5 days.

The firing temperature is preferably 200 to 800°C and more preferably 400 to 700°C. In addition, the firing time is preferably 10 minutes to 2 days and more preferably 1 to 10 hours.

When firing is performed under such conditions, the oxygen carrier can be strongly bonded to the support directly or via oxygen while no or almost no impurities remain in the oxygen carrier.

[Method of Using Reducing Agent]

A reducing agent of the present invention can be used, for example, in the chemical looping method, as described above. In addition, the reducing agent of the present invention can be used for reducing carbon dioxide as described above.

More specifically, it is preferable to perform a reduction reaction of carbon dioxide and a reduction reaction of the reducing agent, and the reducing agent is preferably used so that it circulates between the reduction reaction of carbon dioxide and the reduction reaction of the reducing agent. Here, in the reduction reaction of the reducing agent, other reducing agents (reducing gases) are used.

In addition, the reducing agent of the present invention is preferably used in a so-called reverse water gas shift reaction. The reverse water gas shift reaction is a reaction in which carbon monoxide and water are produced from carbon dioxide and hydrogen. When the chemical looping method is applied, the reverse water gas shift reaction that is divided into a reduction reaction of the reducing agent (first process) and a reduction reaction of carbon dioxide (second process) is performed, and the reduction reaction of the reducing agent is the reaction represented by the following Formula (A), and the reduction reaction of carbon dioxide is the reaction represented by the following Formula (B). Hereinafter, a case in which an oxygen carrier is an oxide represented by $MO_x$ will be described.

$$H_2 \text{ (gas)} + MO_x \text{ (solid)} \rightarrow H_2O \text{ (gas)} + MO_{x-1} \text{ (solid)} \qquad (A)$$

$$CO_2 \text{ (gas)} + MO_{x-1} \text{ (solid)} \rightarrow CO \text{ (gas)} + MO \text{ (solid)} \qquad (B)$$

Here, in Formulae (A) and (B), M is at least two elements.

That is, in the reduction reaction of the reducing agent represented by Formula (A), hydrogen, which is a type of a reducing gas, is oxidized to produce water. In addition, in the reduction reaction of carbon dioxide represented by Formula (B), carbon dioxide is reduced to produce carbon monoxide.

The reaction temperature in the reduction reaction of the reducing agent may be any temperature at which the reduction reaction can proceed and is preferably 300°C or higher, more preferably 400°C or higher, and still more preferably 500°C or higher. Within such a temperature range, the reduction reaction of the reducing agent can proceed efficiently.

The upper limit of the reaction temperature is preferably 850°C or lower, more preferably 750°C or lower, and still more preferably 700°C or lower. When the upper limit of the reaction temperature is set to be within the above range, it is possible to improve economic efficiency.

In addition, the reaction temperature in the reduction reaction of carbon dioxide is preferably 300°C or higher, more preferably 350°C or higher, and still more preferably 400°C or higher. Within this temperature range, a carbon dioxide reduction reaction can efficiently proceed.

The upper limit of the reaction temperature is preferably 1,000°C or lower, more preferably 850°C or lower, still more preferably 700°C or lower, and particularly preferably 650°C or lower. The reducing agent can perform a reaction of reducing carbon dioxide to carbon monoxide with high efficiency even at a low temperature, and thus the reduction reaction of carbon dioxide can be set at a relatively low temperature. In addition, if the upper limit of the reaction temperature is set to be within the above range, it is possible not only to facilitate utilization of waste heat but also further improve the economic efficiency.

Here, in the present invention, the reduced product (valuables containing carbon) obtained by the reduction reaction of carbon dioxide may be a substance other than carbon monoxide, and specific examples thereof include methane. It is preferable that the reduced product such as carbon monoxide obtained by the reduction reaction of carbon dioxide be additionally converted into an organic substance or the like by microbial fermentation or the like. Examples of microbial fermentation include anaerobic fermentation. As the obtained organic substance, methanol, ethanol, acetic acid, butanol, derivatives thereof, mixtures thereof, and C5 or higher compounds such as isoprene may be exemplified.

In addition, reduced products such as carbon monoxide may be converted into C1 to C20 compounds including hydrocarbons and alcohols conventionally synthesized by petrochemicals using metal oxides or the like. Examples of specific compounds obtained include methane, ethane, propylene, methanol, ethanol, propanol, acetaldehyde, diethyl ether, acetic acid, butyric acid, diethyl carbonate, and butadiene.

[Properties of Reducing Agent]

The reducing agent of the present invention preferably has the following properties.

That is, in a stainless steel reaction tube with an inner diameter of 8 mm and a pressure gauge disposed in a flow path, when the reducing agent is filled at a height of 40 cm and nitrogen gas with a concentration of 100 vol% is passed at a 30 mL/min, the pressure rise in 10 minutes is preferably 0.03 MPaG or less and more preferably 0.01 MPaG or less.

A reducing agent exhibiting such properties can be determined that the filling density and the pore volume are within the above ranges, and can sufficiently increase the efficiency of converting carbon dioxide into carbon monoxide.

The reducing agent, the method of producing a gas and the method of increasing conversion efficiency of the present invention have been described above, but the present invention is not limited thereto.

For example, the reducing agent, the method of producing a gas and the method of increasing conversion efficiency of the present invention may have any other additional configuration, may be replaced with any configuration that exhibits similar functions, or may have some configurations omitted, with respect to the above embodiments.

[Examples]

Hereinafter, the present invention will be described in more detail with reference to examples and comparative examples, but the present invention is not limited to these examples.

1. Preparation of Support

Support 1: polygonal columnar silica ($SiO_2$) particles
("SBA-15" commercially available from Sigma-Aldrich)
Support 2: spherical silica ($SiO_2$) particles ("AGC-H51" commercially available from AGC Si-Tech Co., Ltd.)
Support 3: polygonal columnar silica ($SiO_2$) particles
("SBA-15" commercially available from ACS Material)
Support 4: spherical ceria ($CeO_2$) particles ("Wako special grade" commercially available from FUJIFILM Wako Pure Chemical Corporation)
Support 5: ground product of pulverized silica ($SiO_2$) particles (commercially available from Fuji Silysia Chemical Ltd., "CARiACTQ-50")
Support 6: spherical magnesia (MgO) particles (commercially available from Sigma-Aldrich)
Support 7: spherical alumina ($\alpha Al_2O_3$) particles ("for precise polishing" commercially available from FUJIFILM Wako Pure Chemical Corporation)
Support 8: spherical zirconia ($ZrO_2$) particles ("Wako special grade" commercially available from FUJIFILM Wako Pure Chemical Corporation)
Support 9: ground product of pulverized silica ($SiO_2$) particles ("CARiACTQ-10" commercially available from Fuji Silysia Chemical Ltd.)
Support 10: cellular silica ($SiO_2$) particles ("MSU-F" commercially available from Sigma-Aldrich)
Support 11: pulverized silica ($SiO_2$) particles ("CARiACTQ-15" commercially available from Fuji Silysia Chemical Ltd.)
Support 12: spherical alumina ($\gamma Al_2O_3$) particles (commercially available from Strain Chemicals)
Support 13: spherical titania ($TiO_2$) particles ("AMT400" commercially available from Tayca Corp)
Support 14: spherical molybdenum carbide ($CMo_2$) particles (commercially available from Sigma-Aldrich)

2. Production of Reducing Agent

(Example A1)

First, as raw materials, copper(II) nitrate trihydrate (commercially available from FUJIFILM Wako Pure Chemical Corporation, purity: 99.9%) and zinc nitrate hexahydrate (commercially available from FUJIFILM Wako Pure Chemical Corporation, purity: 99.0%) were prepared.

Next, the raw materials were dissolved in water to prepare a 0.5 mol/L raw material aqueous solution. Here, the molar ratio of Cu and Zn in the raw material aqueous solution was set to 0.5:0.5.

Next, the raw material aqueous solution was added dropwise to the support 1. Here, the amount of the support 1 used with respect to 100 mol% of a total amount (reducing agent) of the produced oxygen carrier and the support 1 was set to 83.3 mol%.

Next, a liquid component was removed from the raw material aqueous solution in which the support 1 was immersed using a rotary evaporator.

The recovered support 1 was dried at 120°C for 4 hours and then additionally fired at 700°C for 3 hours to produce a reducing agent composed of a support on which an oxygen carrier (metal oxide) was supported (bonded).

(Example A2 to A8)

Reducing agents were produced in the same manner as in Example A1 except that supports shown in Table 1 were used.

(Comparative Example A1)

A reducing agent was produced in the same manner as in Example A1 except that the support 1 was omitted.

(Comparative Example A2 to A7)

Reducing agents were produced in the same manner as in Example A1 except that supports shown in Table 1 were used.

(Example B1)

A reducing agent was produced in the same manner as in Example A1 except that, first, as raw materials, cerium(III) nitrate hexahydrate (commercially available from Sigma-Aldrich, purity: 99.0%), and zirconium(II) oxynitrate dehydrate (commercially available from Kishida Chemical Co., Ltd., purity: 99.0%) were used. Here, the molar ratio of Ce and Zr in the raw material aqueous solution was set to 0.8:0.2.

(Example B2)

First, as raw materials, cerium(III) nitrate hexahydrate (commercially available from Sigma-Aldrich, purity: 99.0%) and zirconium(II) oxynitrate dehydrate (commercially available from Kishida Chemical Co., Ltd., purity: 99.0%) were prepared.
Next, cerium(III) nitrate hexahydrate and zirconium(II) oxynitrate dehydrate were dissolved in ethanol in which citric acid was dissolved to prepare a raw material solution. Here, the molar ratio of Ce and Zr in the raw material solution was set to 0.8:0.2.
Next, the raw material solution was slowly added dropwise to an aqueous dispersion in which the support 1 was dispersed in deionized water, the mixture was stirred at room temperature for 5 hours to obtain a mixed solution.
Next, a liquid component was removed from the mixed solution using a rotary evaporator. The recovered support 1 was dried at 80°C for 4 hours and then additionally fired at 500°C for 4 hours.
Again, the raw material solution was slowly added dropwise to the aqueous dispersion in which the fired support 1 was dispersed in deionized water, and the mixture was stirred at room temperature for 5 hours to obtain a mixed solution.
Next, a liquid component was removed from the mixed solution using a rotary evaporator. The recovered support 1 was dried at 80°C for 4 hours and then additionally fired at 700°C for 6 hours.
Through the above processes, a reducing agent composed of a support on which an oxygen carrier (metal oxide) was supported (bonded) was produced.
Here, the amount of the support 1 used with respect to 100 mol% of a total amount (reducing agent) of the produced oxygen carrier and the support 1 was set to 73.5 mol%.

(Comparative Example B1)

A reducing agent was produced in the same manner as in Example B1 except that the support 1 was omitted.

(Example C1)

A reducing agent was produced in the same manner as in Example A1 except that, first, as raw materials, indium nitrate trihydrate (commercially available from FUJIFILM Wako Pure Chemical Corporation, purity: 97.0%), copper(II) nitrate trihydrate (commercially available from FUJIFILM Wako Pure Chemical Corporation, purity: 99.9%), and magnesium nitrate hexahydrate (commercially available from FUJIFILM Wako Pure Chemical Corporation, purity: 99.0%) were used. Here, the molar ratio of In, Cu and Mg in the raw material aqueous solution was set to 0.4:0.3:0.3.

(Comparative Example C1)

A reducing agent was produced in the same manner as in Example C1 except that the support 1 was omitted.

3. Measurement and Evaluation

3-1. Measurement of Angle of Repose of Support

Each support was supplied and naturally dropped into a funnel and powder particles were deposited on the horizontal surface of a cylinder with a diameter of 22 mm. Here, a separation distance from the lower end of the funnel to the horizontal surface of the cylinder was set to 25 mm.
In this case, the peak of the conical support formed on the cylinder was observed from the side, the height from the horizontal surface to the top of the peak was measured, and an angle formed with the horizontal surface was calculated from the diameter and the height of the cylinder.
The arithmetic mean value of the angles obtained by repeating this measurement three times was determined and used as an angle of repose (°).

3-2. Measurement of Specific Surface Area of Support

About 10 mg of each support was weighed out and sealed in a sample tube. Then, each sample tube was heated to 120°C and vacuum-degassed for 10 hours.
For nitrogen gas adsorption measurement, using a specific surface area/pore distribution measurement device ("BELSORP Mini2" commercially available from Microtrac Corporation), adsorption and desorption isotherms were measured in a relative pressure range of 0 to 0.99.
Here, for calculating the specific surface area, a BET method was applied to data in a relative pressure range of 0.05 to 0.35 from the measured adsorption isotherm.

3-3. Measurement of Average Pore Size of Support

First, the total pore volume of each support was calculated from the maximum adsorption amount of nitrogen by the gas adsorption method using nitrogen.
The average pore size of each support was obtained by calculation based on the following formula, assuming that pores were cylindrical from the total pore volume and the specific surface area measured by the above method.
average pore size (nm)=$4\times$total pore volume (mL/g)$\div$specific surface area (m$^2$/g)$\times$1000

3-4. Measurement of Average Particle Size of Support

The particle size distribution was measured by a dry measurement method using a laser diffraction scattering type particle size distribution measurement device ("LA960" commercially available from Horiba Ltd.). Here, D50 in the number-based particle size distribution, that is, the median diameter, was set as the average particle size.

4. Evaluation of Properties of Reducing Agent (conversion efficiency)

Using a rapid catalyst evaluation system ("Single μ-reactor Rx-3050SR" commercially available from Frontier Laboratories Ltd.) including a micro reactor and a gas chromatograph mass spectrometer (GC/MS) directly connected to the micro reactor, the properties of the reducing agent were evaluated by the following procedure.
First, 0.1 g of the reducing agent was filled into a quartz reaction tube with an inner diameter of 3 mm and a length of 78 mm. Then, while flowing helium gas at a flow rate of 20 mL/min, the temperature was raised at a temperature increase rate of 40°C/min and heating was performed for 20 minutes.
Next, hydrogen gas (reducing gas) was flowed into the micro reactor at a flow rate of 15 mL/min for 5 minutes, a reduction reaction (first process) of the reducing agent was performed, and the reducing agent was reduced. In this case, water vapors were contained in the gas discharged from the outlet of the micro reactor.
Then, for gas exchange, helium gas was flowed at a flow rate of 20 mL/min for 5 minutes, carbon dioxide gas was then flowed at a flow rate of 5 mL/min for 5 minutes, a reduction reaction (second process) of the carbon dioxide was performed, and carbon dioxide gas (raw material gas) was reduced. In this case, the product gas discharged from the outlet of the reactor contained carbon monoxide.
Then, for gas exchange, helium gas was flowed at a flow rate of 20 mL/min for 5 minutes.
Here, in this test, when any gas was flowed, the temperature of the micro reactor was maintained at 500°C (in the example shown in Table 1) or 650°C (in the example shown in Table 2), and the test was performed under atmospheric pressure conditions.

The efficiency of converting carbon dioxide into carbon monoxide (yield of carbon monoxide) using the reducing agent was calculated by the following formula.

Here, the conversion efficiency is a ratio of the substance amount of carbon monoxide per 1 mol of the oxygen carrier produced in 10 minutes from when flowing of a carbon dioxide gas starts until flowing of helium gas ends with respect to the substance amount of carbon dioxide flowed into the quartz reaction tube.

$$X_{CO} = n_{CO,out} / n_{CO2,in}$$

In the formula, $n_{CO2,in}$ is the substance amount of carbon dioxide in the carbon dioxide gas (raw material gas), and $n_{CO,out}$ is the substance amount of carbon monoxide in the product gas.

Here, in Table 1 and Table 2, the $X_{CO}$ value of the reducing agent of Examples A1 to A8, and Comparative Examples A2 to A7 is shown as a relative value ($X_{CO,r}$) when the $X_{CO}$ value of the reducing agent of Comparative Example A1 is set to "1," the $X_{CO}$ value of the reducing agent of Examples B1 and B2 is shown as a relative value ($X_{CO,r}$) when the $X_{CO}$ value of the reducing agent of Comparative Example B1 is set to "1," and the $X_{CO}$ value of the reducing agent of Example C1 is shown as a relative value ($X_{CO,r}$) when the $X_{CO}$ value of the reducing agent of Comparative Example C1 is set to "1".

Here, measurement conditions in the gas chromatograph mass spectrometer are as follows.

column temperature: 200°C
injection temperature: 200°C
detector temperature: 250°C
column: EGA tube (L: 2.5 m, $\varphi$ (inner diameter): 0.15 mm, t: 0 mm)
column flow rate: 1.00 mL/min
split ratio: 250
purge flow rate: 3.0 mL/min

These results are shown in the following Table 1 and Table 2.

[Table 1]

Table 1

| | oxygen carrier | | support | | | | | conversion efficiency ($X_{CO,r}$) 500°C |
|---|---|---|---|---|---|---|---|---|
| | metal element composition | content [mol%] | type | angle of repose [°] | specific surface area [m²/g] | average pore size [nm] | average particle size [μm] | |
| ExampleA1 | $Cu_{0.5}Zn_{0.5}$ | 83.3 | support 1 | 56.4 | 550 | 11 | 7.97 | 10.8 |
| ExampleA2 | $Cu_{0.5}Zn_{0.5}$ | 83.3 | support 2 | 55.9 | 816 | 4.9 | 3.48 | 7.56 |
| ExampleA3 | $Cu_{0.5}Zn_{0.5}$ | 83.3 | support 3 | 64.4 | 850 | 4 | 6.98 | 7.00 |
| ExampleA4 | $Cu_{0.5}Zn_{0.5}$ | 83.3 | support 4 | 62.0 | 3.8 | 30.1 | 0.35 | 2.58 |
| ExampleA5 | $Cu_{0.5}Zn_{0.5}$ | 83.3 | support 5 | 49.2 | 71 | 47.5 | 4.94 | 1.77 |
| ExampleA6 | $Cu_{0.5}Zn_{0.5}$ | 83.3 | support 6 | 45.4 | 68 | 20.8 | 6.87 | 1.76 |

(continued)

| | oxygen carrier | | support | | | | | conversion efficiency $(X_{CO, r})$ 500°C |
|---|---|---|---|---|---|---|---|---|
| | metal element composition | content [mol%] | type | angle of repose [°] | specific surface area [m²/g] | average pore size [nm] | average particle size [μm] | |
| ExampleA7 | $Cu_{0.5}Zn_{0.5}$ | 83.3 | support 7 | 45.4 | 3.6 | 34.6 | 0.27 | 1.26 |
| ExampleA8 | $Cu_{0.5}Zn_{0.5}$ | 83.3 | support 8 | 53.1 | 8.8 | 61.3 | 0.34 | 1.17 |
| Comparative Example A1 | $Cu_{0.5}Zn_{0.5}$ | 0 | - | - | - | - | - | 1.00 |
| Comparative Example A2 | $Cu_{0.5}Zn_{0.5}$ | 83.3 | support 9 | 41.9 | 300 | 10 | 3.66 | 0.997 |
| Comparative Example A3 | $Cu_{0.5}Zn_{0.5}$ | 83.3 | support 10 | 32.5 | 562 | 15 | 5.38 | 0.969 |
| Comparative Example A4 | $Cu_{0.5}Zn_{0.5}$ | 83.3 | support 11 | 33.6 | 195 | 15 | 3.11 | 0.958 |
| Comparative Example A5 | $Cu_{0.5}Zn_{0.5}$ | 83.3 | support 12 | 43.7 | 182 | 9 | 3.25 | 0.861 |
| Comparative Example A6 | $Cu_{0.5}Zn_{0.5}$ | 83.3 | support 13 | 37.0 | 5.4 | 23.2 | 0.28 | 0.894 |
| Comparative Example A7 | $Cu_{0.5}Zn_{0.5}$ | 83.3 | support 14 | 43.7 | 0.1 | 78 | 0.54 | 0.386 |

[Table 2]

Table 2

| | oxygen carrier | | support | | | | | conversion efficiency (Xco, r) 650°C |
| | metal element composition | content [mol%] | type | angle of repose [°] | specific surface area [m²/g] | average pore size [nm] | average particle size [μm] | |
|---|---|---|---|---|---|---|---|---|
| Example A1 | $Cu_{0.5}Zn_{0.5}$ | 83.3 | support 1 | 56.4 | 550 | 11 | 7.97 | 2.65 |
| Comparative Example A1 | $Cu_{0.5}Zn_{0.5}$ | 0 | - | - | - | - | - | 1.00 |
| Example B1 | $Ce_{0.8}Zr_{0.2}$ | 83.3 | support 1 | 56.4 | 550 | 11 | 7.97 | 1.31 |
| Example B2 | $Ce_{0.8}Zr_{0.2}$ | 73.5 | support 1 | 56.4 | 550 | 11 | 7.97 | 1.92 |
| Comparat ve Example 31 | $Ce_{0.8}Zr_{0.2}$ | 0 | - | - | - | - | - | 1.00 |
| Example C1 | $In_{0.4}Cu_{0.3}Mg_{0.3}$ | 83.3 | support 1 | 56.4 | 550 | 11 | 7.97 | 2.15 |
| Comparative Example C1 | $In_{0.4}Cu_{0.3}Mg_{0.3}$ | 0 | - | - | - | - | - | 1.00 |

The reducing agents of examples had a high efficiency of converting carbon dioxide into carbon monoxide. In addition, when the angle of repose of the suppoert was changed, it was possible to adjust the efficiency of converting carbon dioxide into carbon monoxide.

On the other hand, the reducing agents of the comparative examples had a low efficiency of converting carbon dioxide into carbon monoxide.

**Claims**

1. A reducing agent that produces valuables containing carbon by reducing carbon dioxide, comprising:

   a granular support having a plurality of pores and an angle of repose of 45° or more; and
   an oxygen carrier which is supported on the support and has oxygen ion conductivity.

2. The reducing agent according to claim 1,
   wherein the support has an average pore size of 0.1 nm or more.

3. The reducing agent according to claim 1 or 2,
   wherein the support has an average particle size of 0.1 to 50 um.

4. The reducing agent according to any one of claims 11 to 3,
   wherein the support has a specific surface area of 400 $m^2$/g or more.

5. The reducing agent according to any one of claims 1 to 4,
   wherein the support contains at least one of elements belonging to Group 2 to Group 4, Group 12 and Group 13 in the periodic table.

6. The reducing agent according to any one of claims 1 to 5,
   wherein the support contains at least one of magnesium (Mg), cerium (Ce), titanium (Ti), zirconium (Zr), aluminum (Al), and silicon (Si).

7. The reducing agent according to any one of claims 1 to 6,
   wherein the oxygen carrier contains at least two of elements belonging to Group 2 to Group 4, and Group 11 to Group 13 in the periodic table.

8. The reducing agent according to any one of claims 1 to 7,
   wherein the oxygen carrier contains at least one of magnesium (Mg), cerium (Ce), zirconium (Zr), copper (Cu), zinc (Zn), and indium (In).

9. The reducing agent according to any one of claims 1 to 8,
   wherein the content of the support with respect to 100 mol% of the reducing agent is 50 mol% or more.

10. The reducing agent according to any one of claims 1 to 9,
    wherein the reducing agent, by being brought into contact with a raw material gas containing carbon dioxide, reduces carbon dioxide and is used to produce a product gas containing carbon monoxide as the valuables containing carbon.

11. The reducing agent according to any one of claims 1 to 10,
    wherein the oxidized reducing agent is reduced by being brought into contact with a hydrogen-containing reducing gas.

12. The reducing agent according to any one of claims 1 to 11,
    wherein the reducing agent is used in separate reaction processes, which are a reduction reaction of the carbon dioxide and a reduction reaction of the oxidized reducing agent.

13. A method of producing a gas, comprising
    bringing the reducing agent according to any one of claims 1 to 12 into contact with a raw material gas containing carbon dioxide, reducing carbon dioxide, and producing a product gas containing carbon monoxide.

14. A method of increasing conversion efficiency, comprising
using a reducing agent in which an oxygen carrier having oxygen ion conductivity is supported on a granular support having a plurality of pores and an angle of repose of 45° or more, and increasing an efficiency of converting carbon dioxide into valuables containing carbon using the reducing agent compared with when the oxygen carrier is used alone.

## INTERNATIONAL SEARCH REPORT

| International application No. |
| --- |
| **PCT/JP2022/009051** |

### A. CLASSIFICATION OF SUBJECT MATTER

***B01J 23/80***(2006.01)i; ***B01J 23/10***(2006.01)i; ***B01J 23/825***(2006.01)i; ***B01J 23/83***(2006.01)i; ***C01B 32/40***(2017.01)i;
***C01G 9/00***(2006.01)i; ***C01G 15/00***(2006.01)i; ***C01G 25/00***(2006.01)i
FI:   B01J23/80 M ZAB; B01J23/83 M; C01B32/40; C01G9/00 B; C01G25/00; C01G15/00 B; B01J23/10 M; B01J23/825 M

According to International Patent Classification (IPC) or to both national classification and IPC

### B. FIELDS SEARCHED

Minimum documentation searched (classification system followed by classification symbols)

B01J21/00-38/74; C01B32/40; C01G9/00; C01G15/00; C01G25/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/ JSTChina (JDreamIII); CAplus (STN)

### C. DOCUMENTS CONSIDERED TO BE RELEVANT

| Category* | Citation of document, with indication, where appropriate, of the relevant passages | Relevant to claim No. |
| --- | --- | --- |
| A | WO 2019/230854 A1 (SEKISUI CHEMICAL CO., LTD.) 05 December 2019 (2019-12-05) examples 1, 2 | 1-14 |
| A | US 2020/0139351 A1 (UNIVERSITY OF SOUTH FLORIDA) 07 May 2020 (2020-05-07) claims, examples | 1-14 |
| A | BROWER, Jeremy C. et al. Mesoporous Silica Supported Perovskite Oxides for Low Temperature Thermochemical CO2 Conversion. ChemCatChem, 2020, vol. 12, pp. 6317-6328, DOI:10.1002/cctc.202001216 abstract, 2.1.-2.3.2., table 1 | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 April 2022** | **10 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/009051** |

| Patent document cited in search report | Publication date (day/month/year) | Patent family member(s) | Publication date (day/month/year) |
| --- | --- | --- | --- |
| WO 2019/230854 A1 | 05 December 2019 | (Family: none) | |
| US 2020/0139351 A1 | 07 May 2020 | WO 2018/222749 A1 | |

Form PCT/ISA/210 (patent family annex) (January 2015)

**EP 4 302 872 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200139351